# FASCICULE DE BREVET EUROPEEN

(11) **EP 1 928 698 B1**
(45) Date de publication et mention de la délivrance du brevet: **13.05.2009**
(21) Numéro de dépôt: 06831191.9
(22) Date de dépôt: 19.09.2006
(51) Int. Cl.: B60R 7/00, B60R 11/00, B60R 7/02

(54) **ENSEMBLE D'ACCROCHAGE D'UN ELEMENT DANS L'HABITACLE D'UN VEHICULE AUTOMOBILE**
ANORDNUNG ZUR BEFESTIGUNG EINES ELEMENTS IN EINEM KRAFTFAHRZEUG-PASSAGIERRAUM
ASSEMBLY FOR FIXING AN ELEMENT IN A MOTOR VEHICLE PASSENGER COMPARTMENT

(30) Priorité: 19.09.2005 FR 0552809
(43) Date de publication de la demande: 11.06.2008
(73) Titulaire: RENAULT S.A.S., 92100 Boulogne Billancourt (FR)
(72) Inventeur: PARAYRE, Thierry, F-78640 Villiers Saint Frederic (FR)
(86) Numéro de dépôt international: PCT/FR2006/050902
(87) Numéro de publication internationale: WO 2007/034109

(56) Documents cités:
- EP-A- 1 097 846
- DE-A1- 10 228 360
- DE-A1- 10 362 022
- FR-A- 2 864 492

## Description

L'invention concerne un ensemble d'accrochage d'un élément dans l'habitacle d'un véhicule automobile selon le préambule de la revendication 1. Un tel ensemble est connu du document DE-A-103 62 022.

L'invention s'applique plus particulièrement à l'accrochage de la partie inférieure d'un filet de retenue de charge dans le compartiment à bagages d'un véhicule automobile.

Il est connu d'accrocher la partie inférieure d'un filet de retenue aux navettes des sièges arrières de véhicule automobile. Les navettes d'un siège sont les pieds coulissants dans les rails d'association des sièges. L'accrochage se fait alors au moyen d'un crochet prévu dans la partie inférieure du filet que l'on associe à la navette. Cependant, de telles navettes peuvent être absentes ou supprimées du véhicule automobile, auquel cas, le crochet se fixe sur le rail du siège arrière. Cependant, la fixation n'est alors pas correctement assurée et il se peut que le filet se décroche de son point d'attache inférieur.

Il est également connu de prévoir des anneaux fixes saillant du plancher du compartiment à bagages. La fixation de la partie inférieure du filet se fait alors autour de ces anneaux. Cependant une telle réalisation présente également des inconvénients. En effet, les points d'ancrage du filet sont alors fixes et il n'est pas possible d'adapter leur position en fonction, par exemple, de la position des sièges arrière du véhicule. De plus, les anneaux saillants peuvent gêner le chargement des bagages dans le compartiment dont le plancher ne forme alors pas une surface plane.

L'invention vise à pallier ces inconvénients en proposant un ensemble d'accrochage d'un élément dans l'habitacle d'un véhicule automobile, l'accrochage se faisant de manière efficace, c'est-à-dire sans risque de décrochement de l'élément et la position des points d'ancrage de l'élément étant réglables, par exemple, par rapport à la position des sièges arrière du véhicule.

A cet effet, l'invention concerne un ensemble d'accrochage d'un élément dans l'habitacle d'un véhicule automobile, ledit ensemble comprenant un rail et un dispositif d'accrochage amovible de l'élément, la position dudit dispositif d'accrochage étant réglable en translation longitudinale dans ledit rail, ledit dispositif d'accrochage comprenant un moyen d'accrochage de l'élément, le dispositif comprenant un moyen d'arrêt de la translation du dispositif, ledit moyen étant mobile en rotation par rapport au rail entre une position de réglage, dans laquelle le dispositif peut se déplacer en translation par rapport au rail, et une position d'arrêt, dans laquelle le dispositif est solidarisé au rail, ledit dispositif comprenant en outre un moyen de blocage de la rotation dudit moyen d'arrêt lorsqu'il est dans sa position d'arrêt.

Ainsi, le dispositif d'accrochage peut se déplacer dans le rail, par exemple le rail d'un siège arrière de véhicule automobile et sa position peut être assurée fermement, le dispositif d'accrochage étant maintenu à l'intérieur du rail. De plus, aucun aménagement particulier, tel que la fixation de crochets dans le compartiment à bagages, du véhicule n'est nécessaire.

D'autres objets et avantages de l'invention apparaîtront au cours de la description qui suit, faite en référence aux dessins annexés.

La figure 1 est une représentation schématique partielle en perspective d'un ensemble d'accrochage selon l'invention.

La figure 2 est une représentation schématique de face de l'ensemble, le moyen d'arrêt étant dans sa position de réglage.

La figure 3 est une représentation schématique en perspective de face de l'ensemble, le moyen d'arrêt étant dans sa position d'arrêt.

La figure 4 est une représentation schématique en perspective du moyen d'accroche solidaire du moyen d'arrêt.

La figure 5 est une représentation schématique en perspective du dispositif d'accrochage selon l'invention.

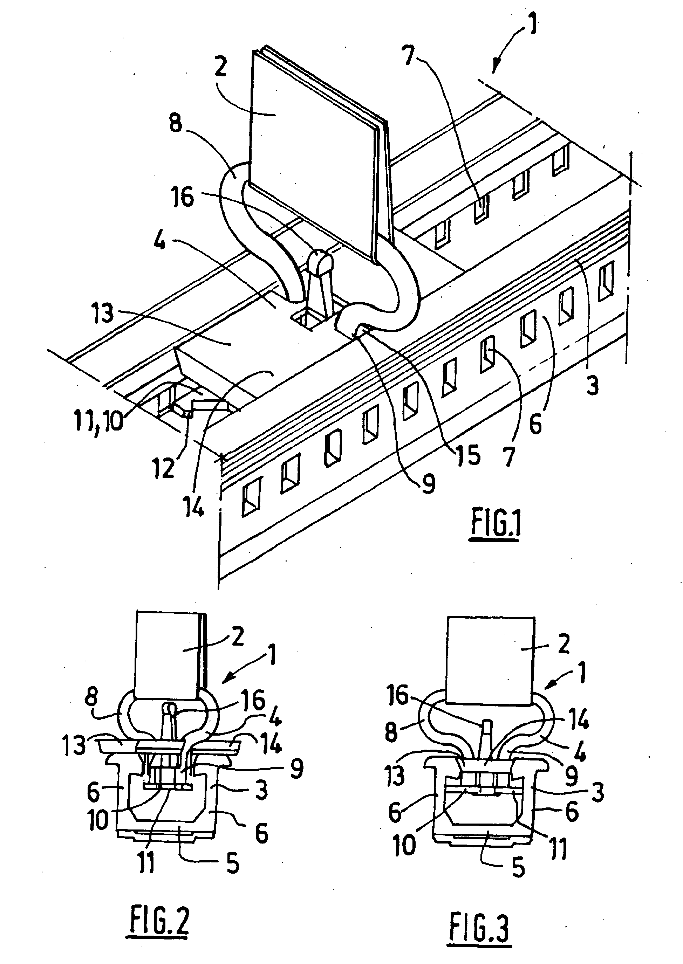

En référence aux figures 1 à 3, on décrit un ensemble d'accrochage 1 d'un élément 2 dans l'habitacle d'un véhicule automobile. L'ensemble 1 comprend un rail 3 et un dispositif d'accrochage 4 amovible dont la position est réglable en translation longitudinale par rapport au rail 3.

Par longitudinale, on entend une direction parallèle à le direction du rail. Par transversal, on entend une direction perpendiculaire à la direction longitudinale et correspondant sensiblement à la direction d'élévation d'un véhicule automobile.

L'élément 2 peut être plus particulièrement un filet de retenue de charge accroché dans le compartiment à bagages du véhicule automobile. Dans ce cas, le rail 3 est par exemple une glissière de réglage de la position d'un siège arrière de véhicule. Le dispositif d'accrochage 4 est disposé dans le rail 3 derrière les pieds du siège, c'est-à-dire du côté du compartiment à bagages. Un dispositif d'accrochage 4 peut être prévu dans chaque glissière présente pour les sièges arrière du véhicule.

Le rail 3 peut donc être de type connu, tel qu'un rail usuellement utilisé pour réaliser une glissière de siège de véhicule. Ainsi, comme représenté sur les figures 2 et 3, le rail 3 présente une section sensiblement en forme de U et comprend une base 5 s'étendant sensiblement longitudinalement et deux branches 6 sensiblement perpendiculaires à la base 5, associées respectivement à un bord longitudinal de la base 5. Les branches 6 définissent un espace entre elles. Au moins une des branches présente au moins un orifice 7. Selon une réalisation, chaque branche 6 présente une pluralité d'orifices 7 répartis le long du rail 3. Ces orifices 7 sont par exemple les crans de réglage de la position du siège.

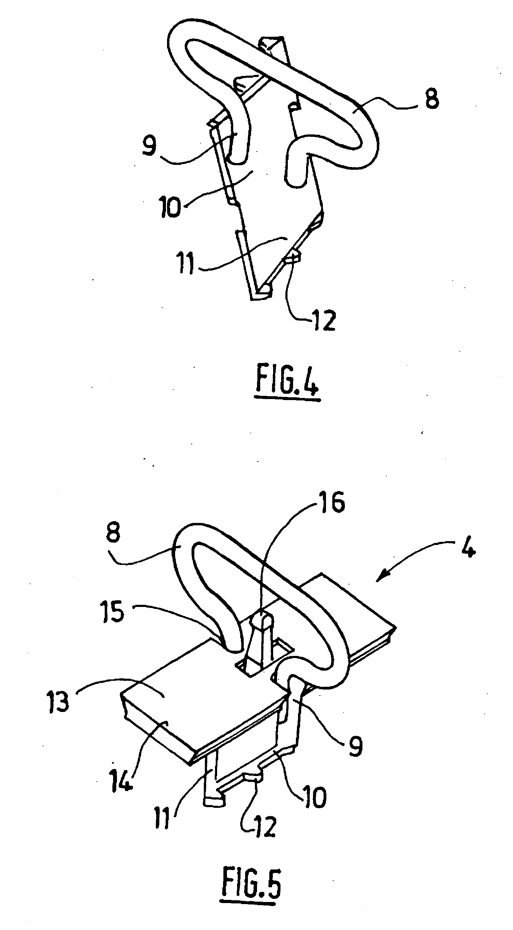

Le dispositif d'accrochage 4 comprend un moyen d'accrochage 8. Le moyen d'accrochage 8 est par exemple un anneau autour duquel une partie de l'élément 2 est accrochée comme représenté sur les figures 1 à 3. Le moyen d'accrochage comprend en outre deux branches 9 s'étendant sensiblement transversalement et fermant l'anneau, comme représenté sur les figures 4 et 5.

Le moyen d'accrochage 8 est solidaire d'un moyen d'arrêt 10 de la translation du dispositif 4 par rapport au rail 3. Le moyen d'arrêt 10 est monté en rotation par rapport au rail 3 entre une position de réglage, dans laquelle le dispositif 4 peut se déplacer en translation par rapport au rail 3, et une position d'arrêt, dans laquelle le dispositif 4 est solidarisé au rail 3. La position de réglage est représentée sur la figure 2 et la position d'arrêt est représentée sur la figure 3. Le moyen d'arrêt 10 est par exemple formé par une plaque 11 solidaire du moyen d'accrochage 8. A cet effet, les branches 9 de l'anneau sont par exemple soudées sur la plaque 11. La plaque 11 est introduite dans le rail 3 entre ses deux branches 6 et s'étend sensiblement parallèlement à sa base 5, comme représenté sur les figures 2 et 3. La plaque 11 comprend au moins une saillie 12 et est disposée en regard des ouvertures 7 des branches 6 du rail 3. Ainsi, lorsque l'on fait tourner le moyen d'arrêt 10 depuis la position de réglage, la saillie 12 s'engage dans une ouverture 7 et coopère avec ladite ouverture lorsque le moyen d'arrêt 10 est dans sa position d'arrêt. La saillie 12 engagée dans l'ouverture 7 assure un maintien efficace du dispositif d'accrochage 4 qui est alors solidarisé au rail.

Selon une réalisation, la plaque 11 présente sensiblement une forme de parallélogramme comprenant deux petits côtés parallèles et deux grands côtés parallèles. Au moins un desdits petits côtés comprend la saillie 12. Les dimensions de la plaque 11 sont agencées pour que la plaque 11 puisse se déplacer en translation longitudinale sans interférence avec le rail 3 lorsque le moyen d'arrêt 10 est dans sa position de réglage et pour que la saillie 12 s'engage dans l'ouverture 7 du rail 3 lorsque le moyen d'arrêt 10 subit une rotation pour se trouver dans sa position d'arrêt. Dans la position de réglage, les grands côtés de la plaque sont sensiblement parallèles à l'axe de la base 5 du rail 3, tandis que dans la position d'arrêt, ce sont les petits côtés qui sont sensiblement parallèles à l'axe de la base 5. De plus, dans la position de réglage, le dispositif d'accrochage 4 peut être ôté du rail 3, comme représenté sur la figure 2.

Selon la réalisation représentée sur les figures 4 et 5, les deux petits côtés comprennent chacun une pluralité de saillies 12, notamment deux saillies. Ces saillies coopèrent avec une partie des ouvertures 7 lorsque le moyen d'arrêt 10 est dans sa position d'arrêt. Plusieurs saillies 12 étant engagées dans les ouvertures 7, le maintien du dispositif d'accrochage 4 en position d'arrêt est amélioré.

L'anneau formant moyen d'accrochage 8 présente un axe décalé angulairement par rapport à l'axe de la plaque 11. Le décalage angulaire est agencé pour que, lorsque le moyen d'arrêt 10 se trouve dans sa position d'arrêt, l'axe de l'anneau soit sensiblement parallèle à l'axe de la base 5 du rail 3. Selon la réalisation représenté sur les figures, le décalage angulaire est en outre agencé pour que l'angle de rotation entre la position d'arrêt et la position de réglage corresponde sensiblement à 1/8 de tour du moyen d'arrêt.

Le dispositif d'accrochage 4 comprend en outre un moyen de blocage 13 de la rotation du moyen d'arrêt 10 lorsqu'il est dans sa position d'arrêt. Un tel moyen de blocage 13 permet donc d'empêcher le moyen d'arrêt 10 de subir une rotation involontaire qui le placerait dans sa position de réglage et pourrait entraîner une translation involontaire du dispositif d'accrochage 4 dans le rail 3.

Selon une réalisation, le moyen de blocage en rotation 13 comprend une pièce 14 mobile en translation transversale par rapport au moyen d'accrochage 8. La pièce mobile 14 présente une forme sensiblement rectangulaire comme représenté sur la figure 5. La largeur de la pièce 14, correspondant à la dimension des petits côtés du rectangle, est sensiblement égale à la distance d'écartement des branches 6 du rail 3 de sorte que la pièce peut s'emboîter dans le rail 3 lorsque le moyen d'arrêt 10 est dans sa position d'arrêt, de sorte à bloquer sa rotation, comme représenté sur les figures 1 et 3.

La pièce 14 peut être associée en translation transversale aux branches 9 du moyen d'accrochage 8, par exemple au moyen d'encoches 15 prévues dans les grands côtés de la pièce 14, les branches 9 étant engagées dans les encoches 15. Ainsi, les grands côtés de la pièce 14 sont sensiblement parallèles à l'axe de l'anneau formant moyen d'accrochage 8. De la sorte, lorsque les moyens d'arrêt 10 sont en position de réglage, la pièce 14 repose sur le rail 3 et ne peut s'emboîter entre les branches 6 du rail, comme représenté sur la figure 2. Lorsque les moyens d'arrêt passent en position d'arrêt, la pièce s'étend sensiblement parallèlement à la base 5 du rail 3 et peut donc s'emboîter entre les branches 6 du rail afin de bloquer la rotation.

Selon une réalisation, la pièce 14 comprend une patte s'étendant en direction de la plaque 11, ladite patte s'engageant dans un orifice prévu dans la plaque 11 lorsque la pièce 14 s'emboîte entre les branches du rail 6. Le blocage de la rotation est ainsi maintenu.

La pièce 14 peut tomber dans le rail 3 du fait de son propre poids ou du fait d'une pression exercée par un utilisateur lorsque le moyen d'arrêt 10 est placé dans sa position d'arrêt.

Un moyen de préhension 16 de la pièce 14 est prévu afin de pouvoir faire sortir la pièce 14 du rail 3 afin de libérer la rotation du moyen d'arrêt 10. Le moyen de préhension 16 est par exemple un ergot saillant de la pièce 14 comme représenté sur les figures. Le moyen de préhension 14 peut également être moulé d'une seule pièce avec la pièce 14.

## Revendications

1. Ensemble d'accrochage d'un élément (2) dans l'habitacle d'un véhicule automobile, ledit ensemble comprenant un rail (3) et un dispositif d'accrochage (4) amovible de l'élément (2), la position dudit dispositif d'accrochage étant réglable en translation longitudinale dans ledit rail, ledit dispositif d'accrochage comprenant un moyen d'accrochage (8) de l'élément (2) et un moyen d'arrêt (10) de la translation du dispositif (4), ledit moyen étant mobile en rotation par rapport au rail (3) entre une position de réglage, dans laquelle le dispositif (4) peut se déplacer en translation par rapport au rail . (3), et une position d'arrêt, dans laquelle le dispositif (4) est solidarisé au rail (3), **caractérisé en ce que** ledit dispositif comprend en outre un moyen de blocage (13) de la rotation dudit moyen d'arrêt lorsqu'il est dans sa position d'arrêt.

2. Ensemble d'accrochage selon la revendication 1, **caractérisé en ce que** le rail (3) présente une section sensiblement en forme de U, ledit rail comprenant une base (5) s'étendant sensiblement longitudinalement et deux branches (6) sensiblement perpendiculaires à ladite base associées respectivement à un bord longitudinal de ladite base.

3. Ensemble d'accrochage selon la revendication 2, **caractérisé en ce que** le moyen d'arrêt (10) de la translation comprend une plaque (11) solidaire du moyen d'accrochage (8), ladite plaque étant introduite dans le rail (3) entre ses deux branches (6), la plaque (11) s'étendant sensiblement parallèlement à la base (5), ladite plaque comprenant au moins une saillie (12), le rail (3) comprenant au moins une ouverture (7) disposée dans une des branches (6) en regard de la plaque (11), ladite saillie coopérant avec ladite ouverture lorsque le moyen d'arrêt (10) est dans sa position d'arrêt.

4. Ensemble selon la revendication 3, **caractérisé en ce que** la plaque (11) présente sensiblement une forme de parallélogramme, comprenant deux petits côtés parallèles et deux grands côtés parallèles, au moins un desdits petits côtés comprenant la saillie (12), les dimensions de la plaque (11) étant agencées pour que la plaque (11) puisse se déplacer en translation longitudinale sans interférence avec le rail (3) lorsque le moyen d'arrêt (10) est dans sa position de réglage et pour que la saillie (12) s'engage dans l'ouverture (7) du rail (3) lorsque le moyen d'arrêt (10) subit une rotation pour se trouver dans sa position d'arrêt.

5. Ensemble selon la revendication 4, **caractérisé en ce que** les deux petits côtés comprennent chacun une pluralité de saillies (12), les branches (6) du rail (3) comprenant chacune une pluralité d'ouvertures (7), lesdites saillies coopérant avec une partie desdites ouvertures lorsque le moyen d'arrêt (10) est dans sa position d'arrêt.

6. Ensemble d'accrochage selon l'une quelconque des revendications 2 à 5, **caractérisé en ce que** le moyen de blocage (13) en rotation comprend une pièce (14) mobile en translation transversale par rapport au moyen d'accrochage (8), ladite pièce présentant une largeur sensiblement égale à la distance d'écartement des branches (6) du rail (3) de sorte que ladite pièce peut s'emboîter dans le rail (3) lorsque le moyen d'arrêt (10) est dans sa position d'arrêt, de sorte à bloquer la rotation dudit moyen d'arrêt.

7. Ensemble d'accrochage selon la revendication 6, **caractérisé en ce que** le moyen d'accrochage (8) comprend deux branches (9) solidaires du moyen d'arrêt (10), lesdites branches s'étendant sensiblement transversalement, la pièce (14) étant associée en translation auxdites branches.

8. Ensemble d'accrochage selon la revendication 6 ou 7, **caractérisé en ce que** le dispositif d'accrochage (4) comprend un moyen de préhension (16) de la pièce (14), de sorte à permettre de faire sortir ladite pièce du rail (3) afin de libérer la rotation du moyen d'arrêt (10).

9. Ensemble d'accrochage selon l'une quelconque des revendications 1 à 8, **caractérisé en ce que** l'angle de rotation entre la position d'arrêt et la position de réglage correspond sensiblement à 1/8 de tour du moyen d'arrêt (10).

10. Ensemble d'accrochage selon l'une quelconque des revendications 1 à 9, **caractérisé en ce que** le dispositif d'accrochage (4) peut être ôté du rail lorsque le moyen d'arrêt (10) est dans sa position de réglage.

## Claims

1. Assembly for fixing an element (2) in the passenger compartment of a motor vehicle, the said assembly comprising a rail (3) and a fixing device (4) for removably attaching the element (2), the position of the said fixing device being adjustable in terms of longitudinal translation in the said rail, the said fixing device comprising a fixing means (8) for fixing the element (2), and a stop means (10) for halting the translation of the device (4), the said means being able to move in terms of rotation with respect to the rail (3) between an adjusting position in which the device (4) can move translationally with respect to the rail (3), and a stop position in which the device (4) is secured to the rail (3), **characterized in that** the said device further comprises an immobilizing means (13) for immobilizing the said stop means in terms of rotation when it is in its stop position.

2. Fixing assembly according to Claim 1, **characterized in that** the rail (3) has a substantially U-shaped cross section, the said rail comprising a base (5) running substantially longitudinally and two branches (6) substantially perpendicular to the said base and each associated with a respective longitudinal edge of the said base.

3. Fixing assembly according to Claim 2, **characterized in that** the translation-stopping means (10) comprises a plate (11) secured to the fixing means (8), the said plate being inserted into the rail (3) between the two branches (6) thereof, the plate (11) running substantially parallel to the base (5), the said plate comprising at least one projection (12), the rail (3) comprising at least one opening (7) arranged in one of the branches (6) facing the plate (11), the said projection collaborating with the said opening when the stop means (10) is in its stop position.

4. Assembly according to Claim 3, **characterized in that** the plate (11) is substantially in the shape of a parallelogram comprising two parallel short sides and two parallel long sides, at least one of the said short sides comprising the projection (12), the dimensions of the plate (11) being arranged such that the plate (11) can move in longitudinal translation without interference with the rail (3) when the stop means (10) is in its adjusting position and so that the projection (12) engages in the opening (7) of the rail (3) when the stop means (10) is rotated into its stop position.

5. Assembly according to Claim 4, **characterized in that** the two short sides each comprise a plurality of projections (12), the branches (6) of the rail (3) each comprising a plurality of openings (7), the said projections collaborating with some of the said openings when the stop means (10) is in its stop position.

6. Fixing assembly according to any one of Claims 2 to 5, **characterized in that** the rotation immobilizing means (13) comprises a part (14) capable of transverse translational movement with respect to the fixing means (8), the said part being of a width substantially equal to the distance separating the branches (6) of the rail (3) so that the said part can fit in the rail (3) when the stop means (10) is in its stop position, so as to immobilize the said stop means in terms of rotation.

7. Fixing assembly according to Claim 6, **characterized in that** the fixing means (8) comprises two branches (9) secured to the stop means (10), the said branches running substantially transversely, the part (14) being associated with the said branches in terms of translation.

8. Fixing assembly according to Claim 6 or 7, **characterized in that** the fixing device (4) comprises a means (16) of grasping the part (14) so as to allow the said part to be extracted from the rail (3) so as to free the stop means (10) to allow it to rotate.

9. Fixing assembly according to any one of Claims 1 to 8, **characterized in that** the angular rotation between the stop position and the adjusting position corresponds to substantially 1/8 of a turn of the stop means (10).

10. Fixing assembly according to any one of Claims 1 to 9, **characterized in that** the fixing device (4) can be removed from the rail when the stop means (10) is in its adjusting position.

## Patentansprüche

1. Anordnung zur Befestigung eines Elements (2) in einem Passagierraum eines Kraftfahrzeugs, wobei die Anordnung eine Schiene (3) und eine Vorrichtung (4) zur lösbaren Befestigung des Elements (2) umfasst, wobei die Position der Befestigungsvorrichtung in Längsrichtung in der Schiene translatorisch einstellbar ist, wobei die Befestigungsvorrichtung ein Mittel (8) zur Befestigung des Elements (2) und ein Mittel (10) zum Anhalten der translatorischen Bewegung der Vorrichtung (4) umfasst, wobei das Mittel bezüglich der Schiene (3) zwischen einer Einstellposition, in der sich die Vorrichtung (4) bezüglich der Schiene (3) translatorisch bewegen kann, und einer Anhalteposition, in der die Vorrichtung (4) fest mit der Schiene (3) verbunden ist, drehbeweglich ist, **dadurch gekennzeichnet, dass** die Vorrichtung des Weiteren ein Mittel (13) zum Sperren der Drehung des Anhaltemittels, wenn dieses sich in seiner Anhalteposition befindet, umfasst.

2. Befestigungsanordnung nach Anspruch 1, **dadurch gekennzeichnet, dass** die Schiene (3) einen im Wesentlichen U-förmigen Querschnitt aufweist, wobei die Schiene eine sich im Wesentlichen in Längsrichtung erstreckende Basis (5) und zwei im Wesentlichen senkrecht zu der Basis verlaufende Arme (6) aufweist, die jeweils einem Längsrand der Basis zugeordnet sind.

3. Befestigungsanordnung nach Anspruch 2, **dadurch gekennzeichnet, dass** das Mittel (10) zum Anhalten der translatorischen Bewegung eine Platte (11) umfasst, die fest mit dem Befestigungsmittel (8) verbunden ist, wobei die Platte in der Schiene (3) zwischen ihren beiden Armen (6) eingeführt ist, wobei sich die Platte (11) im Wesentlichen parallel zur Basis (5) erstreckt, wobei die Platte mindestens einen Vorsprung (12) aufweist, wobei die Schiene (3) mindestens eine Öffnung (7) aufweist, die in einem der Arme (6) gegenüber der Platte (11) angeordnet ist, wobei der Vorsprung mit der Öffnung zusammenwirkt, wenn sich das Haltemittel (10) in seiner Halteposition befindet.

4. Anordnung nach Anspruch 3, **dadurch gekennzeichnet, dass** die Platte (11) im Wesentlichen die Form eines Parallelogramms aufweist, das zwei kurze parallele Seiten und zwei lange parallele Seiten aufweist, wobei mindestens eine der kurzen Seiten den Vorsprung (12) aufweist, wobei die Abmessungen der Platte (11) so ausgeführt sind, dass sich die Platte (11) ohne Behinderung mit der Schiene (3) in Längsrichtung translatorisch bewegen kann, wenn sich das Haltemittel (10) in seiner Einstellposition befindet, und dass der Vorsprung (12) in die Öffnung (7) der Schiene (3) eingreift, wenn das Haltemittel (10) eine Drehung erfährt, um in die Halteposition zu gelangen.

5. Anordnung nach Anspruch 4, **dadurch gekennzeichnet, dass** die beiden kleinen Seiten jeweils mehrere Vorsprünge (12) aufweisen, wobei die Arme (6) der Schiene (3) jeweils mehrere Öffnungen (7) aufweisen, wobei die Vorsprünge mit einen Teil der Öffnungen zusammenwirken, wenn sich das Haltemittel (10) in der Halteposition befindet.

6. Befestigungsanordnung nach einem der Ansprüche 2 bis 5, **dadurch gekennzeichnet, dass** das Drehsperrmittel (13) ein bezüglich des Befestigungsmittels (8) in Querrichtung translatorisch bewegliches Teil (14) aufweist, wobei das Teil eine Breite aufweist, die im Wesentlichen gleich der Abstandsstrecke der Arme (6) der Schiene (3) entspricht, so dass das Teil in die Schiene (3) eingreifen kann, wenn sich das Haltemittel (10) in seiner Halteposition befindet, um die Drehung des Haltemittels zu sperren.

7. Befestigungsanordnung nach Anspruch 6, **dadurch gekennzeichnet, dass** das Befestigungsmittel (8) zwei Arme (9) umfasst, die fest mit dem Haltemittel (10) verbunden sind, wobei sich die Arme im Wesentlichen quer erstrecken, wobei das Teil (14) den Armen translatorisch zugeordnet ist.

8. Befestigungsanordnung nach Anspruch 6 oder 7, **dadurch gekennzeichnet, dass** die Befestigungsvorrichtung (4) ein Mittel (16) zum Ergreifen des Teils (14) umfasst, damit das Teil der Schiene (3) herausgehoben werden kann, um die Drehung des Haltemittels (10) freizugeben.

9. Befestigungsanordnung nach einem der Ansprüche 1 bis 8, **dadurch gekennzeichnet, dass** der Drehwinkel zwischen der Halteposition und der Einstellposition im Wesentlichen 1/8 der Umdrehung des Haltemittels (10) entspricht.

10. Befestigungsanordnung nach einem der Ansprüche 1 bis 9, **dadurch gekennzeichnet, dass** die Befestigungsvorrichtung (4) von der Schiene abgenommen werden kann, wenn sich das Haltemittel (10) in seiner Einstellposition befindet.
